# EUROPEAN PATENT APPLICATION

(11) **EP 4 475 036 A1**
(43) Date of publication of application: **11.12.2024**
(21) Application number: 24178571.6
(22) Date of filing: 28.05.2024
(51) Int. Cl.: G06N 3/045, G06N 3/082

(54) **BLOCK-WISE NEURAL ARCHITECTURE SEARCH USING GUIDED SEARCH ALGORITHM**

(30) Priority: 09.06.2023 US 202318208157
(71) Applicant: NXP B.V., 5656 AG Eindhoven (NL)
(72) Inventor: Vogel, Sebastian Alexander Amadeus, 5656AG Eindhoven (NL); Rayo Torres Rodriguez, Hiram, 5656AG Eindhoven (NL); van de Waterlaat, Nick Petrus Martinus, 5656AG Eindhoven (NL)
(74) Representative: Miles, John Richard

(57) **Abstract**

A computing system divides an initial seed network into a plurality of blocks to form a network search space that includes candidate neural architectures. For each block in the plurality of blocks, sample-based search spaces are defined. Each sample-based search space includes candidate block configurations. The candidate block configurations are determined by determining candidate block configurations that minimize a block-wise knowledge distillation loss. A first set of block configurations that are Pareto optimal block configurations are determined from the candidate block configurations in the sample-based search spaces. Sub-super-net search spaces for each block configuration in the first set of block configurations are determined. Using input training data, each of the sub-super-net search spaces are trained to generate a trained candidate models. An optimized neural architecture is determined by determining a first trained candidate model of the trained candidate models that minimizes a knowledge distillation loss of the trained candidate models.

## Description

### TECHNICAL FIELD

The present disclosure is directed to an improved system and method for neural architecture search (NAS) and analysis and, specifically, to a NAS system and method that uses a sample-based and block-wise NAS approach to provide comprehensive and efficient searches that may require fewer computing resources to implement over conventional approaches and enables rapid network prototyping and implementation.

### BACKGROUND

Artificial neural networks are a class of machine-learned models that can be used for various computing tasks. An artificial neural network (or just neural network) is typically based on a collection of connected units or nodes referred to as artificial neurons, which loosely model the neurons in a biological brain. Each connection, like the synapses in a biological brain, can transmit a signal to other neurons. An artificial neuron that receives a signal then processes it and can signal neurons connected to it. In neural network implementations, the "signal" at a connection is a real number, and the output of each neuron is computed by some non-linear function of the sum of its inputs (e.g., a sigmoid activation function). The connections are referred to as edges. Neurons and edges typically have associated weights that are adjusted as training of the neural network proceeds. The weight increases or decreases the strength of the signal at a connection. Neurons may have a threshold such that a signal is sent only if the aggregate input signal to that neuron crosses that threshold. Typically, neurons are aggregated into layers. Different layers may perform different transformations on their inputs. Signals travel from the first layer (the input layer) to the last layer (the output layer), possibly after traversing the layers multiple times.

A neural network architecture may be configured as a feed-forward network with one or more hidden layers, and with a backpropagation learning algorithm. Implementation of a neural network may involve three phases: a training, or learning, phase; a validation phase; and an inference, or production, phase. In the training phase, the neural network essentially learns by comparing its actual output with known correct outputs (or at least outputs that are more near a desired output) to find errors. It then modifies its model accordingly. In the validation phase, the trained neural network is verified by means of data ("validation set"), which may be different from the data used in the training phase. In the inference, or production, phase, the trained and validated neural network is now configured and capable of providing outputs that correspond to any input.

In many implementations it may be desirable to optimize the design of a neural network (e.g., by changing the network's architecture to reduce a total number of nodes in the network or to reduce or modify the number of layers in the network) to enable the neutral network to be effectively utilized by a device having constrained computing resources. To facilitate the neural network design optimization process, one developing field of study is that of neural architecture search (NAS). NAS search uses the principles and techniques of machine learning to automate or "learn" the design of new artificial neural network architectures. In particular, as examples, neural architecture search techniques may seek to automate the specification and discovery of entire neural network topologies, activation functions, gradient update rules, and/or many other complex details that underlie state-of-the-art deep learning architectures. These efforts assume various names in addition to neural architecture search, including "learning to learn," "AutoML," "meta-learning," or the like.

Existing neural architecture search techniques often work by iteratively searching within a search space that defines the bounds of the search. For example, a search technique can include iteratively sampling architectures within the search space to generate new architectures. Generally, the speed with which a neural architecture search can be performed is, at least in part, a function of the size of its search space. That is, a larger search space includes a larger number of possible permutations which will take longer to search, while a smaller search space will be faster to search.

The application of NAS techniques to the design of state-of-the-art neural networks (e.g., deep convolutional neural networks) has been challenging due to the large and complex nature of typical state-of-the-art neural networks. Certain state-of-the-art neural networks may include hundreds if not thousands of layers. Because there are so many layers, it is extremely computationally challenging to perform search techniques which both seek to mimic the significantly deep structure of such state-of-the-art networks while also searching on a layer-by-layer basis.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a block diagram depicting a general method for performing NAS.
FIG. 2 is a flow chart depicting an example method for performing block-wise NAS.
FIG. 3 depicts an example seed network, that has been subdivided into blocks (i.e., N = 3).
FIG. 4 depicts an example super-net-based search space.
FIG. 5 is a flow chart depicting an example method for performing block-wise NAS.
FIG. 6 depicts a block diagram of an example computing system according to example embodiments of the present disclosure.

### DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Neural networks can be difficult to design and often require expert knowledge and trial and error to optimize. Typical design approaches involve defining a neural network architecture search (NAS) space that defines a set of candidate design architectures. This search space is based upon an initial seed network, which is used to build the search space by introducing various searchable factors (e.g., kernel sizes, number of layers, and the like) into that initial seed network.. The various design options contained within that initial set of options are then be evaluated to determine a suitable design architecture for the application at hand. In some cases, this process can be automated, such that the various design options are selected, constructed, and evaluated without human involvement. Although this process can enable the automated evaluation of multiple network design architectures without need for manual definition of the parameters of each network design, the process of defining the original network architecture search space can itself present significant difficulties. The potential search space can be vast and, consequently, expert knowledge is required even to design the initial search space or seed network itself.

The present disclosure provides systems and method to assists users of NAS to design and configure a search space for NAS more efficiently and more effectively.

One NAS approach involves using super-net-based search spaces. These search spaces are typically homogenous, restricted, and non-diverse. As such, the search spaces can be easier to construct and, given their restricted nature, easier to evaluate. For example, such a search space my only define two potential options for kernel sizes (e.g., 3 and 5) and only two options for filter size multipliers (e.g., expansion ratios 3 and 6). Although these constrained search spaces enable evaluation using relatively resource-constrained devices (e.g., devices with limited computing resources), the constrained search spaces do not enable an effective search to provide some assurance that a truly optimized network architecture designs has been selected for the given problem.

In another approach, block-wise NAS approaches involve splitting an initial network architecture search space into a number of cells or blocks. Those blocks that can be evaluated and optimized individually and then combined into a larger network design as part of a block-wise NAS approach.

Typically, approaches to diversify the search spaces in block-wise NAS approaches included a (typically, manual) dedicated step in which after deriving a ranking table for a block sub-super-net another block sub-super-net would be trained and evaluated to extend the findings with more diverse block configurations.

As discussed, NAS is resource intensive and typically does not reuse previous search results. Previous search results are hard to reuse because the initial seed network, the task, and the dataset etc. may be different from one NAS iteration to the next.

The present invention proposes to extend block-wise NAS methods that utilize a network design search space that is derived through a divide-and-conquer approach of a user-provided seed network. Due to this block-level optimization the likelihood for options to reuse previously evaluated blocks is increased.

Specifically, the present disclosure describes a system and method for NAS that utilizes a sampling-based NAS method that provides hyperparameter optimization (HPO) on a per-block-level by means of a block-wise knowledge distillation (BKD) process. That is, a system controller is configured to process and evaluate individual block configurations and their training hyper-parameters (HP) to determine which block configuration leads to a low BKD score. This process is relatively straight-forward and enables efficient sampling of the search space (e.g., by Bayesian Optimization (BO)) and enables even unconstrained search spaces by introducing network-morphisms. Resources may be assigned to blocks based on an achieved relative BKD and relative BKD improvements. By using a multi-objective optimization (MO) approach that improves the MO-hypervolume, hardware constraints are taken into account too. Lastly, the approach proposes to store results together with meta-information to jump-start later similar searches.

The present disclosure, therefore, provides a NAS approach that does not rely as heavily on user intuition and knowledge as conventional approaches. Furthermore, the predefined search space is optimized via bottom-up construction. Once specified, the search space can be evaluated while taking into account availability of resources. As searches are performed, the present NAS approach enables the storage of intermediary evaluation data enabling its use in future NAS activity, greatly improving the efficiency of those later searches.

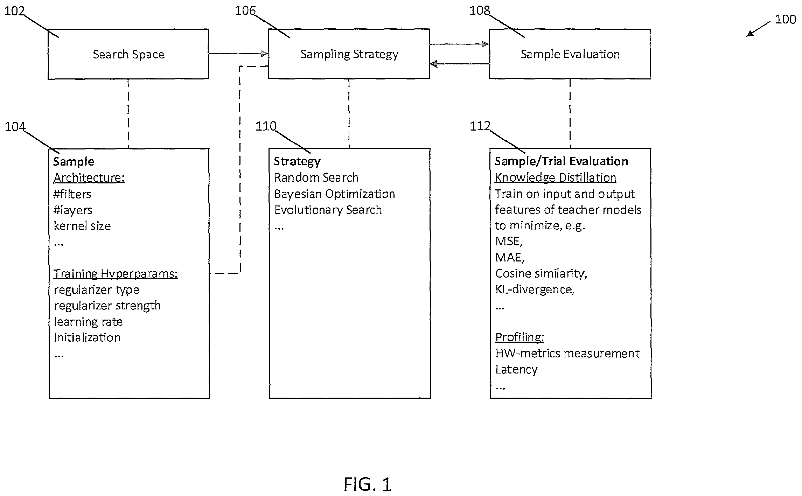

FIG. 1 is a block diagram depicting a general method 100 for performing NAS. Referring to FIG. 1 a search space 102 based on a seed network is defined. As shown, the search space 102 may define a number of candidate neural network architectures, where each candidate 104 defines certain attributes of the candidate architecture, including the number of filters and layers, kernel size, regularizer type and strength, learning rate, and initialization attributes.

Given the defined search space 102, a sampling strategy 106 is implemented in which different candidates 104 of the search space are selected, instantiated and evaluated by evaluation block 108. The sampling strategy 106 may be random or driven via a search strategy 110 (e.g., Bayesian optimization, evolutionary methods, reinforcement learning, and gradient-based methods).

Once a candidate architecture is selected, that architecture is instantiated and evaluated in evaluation block 108. Evaluation block 108 may perform knowledge distillation and profiling 112 as part of evaluating the candidate architecture, which can include training the selected candidate architecture to minimize a number of attributes, including mean square error (MSE), mean absolute error (MAE), cosine similarity, and relative entropy or Kullback-Leibler (KL) divergence.

As the candidate architectures are evaluated, the results of that evaluation can be feedback into sampling strategy 106 enabling refinement of the sampling strategy 106 to enable sampling strategy 106 to select candidate architectures from search space 102 that are more optimized for the desired solution.

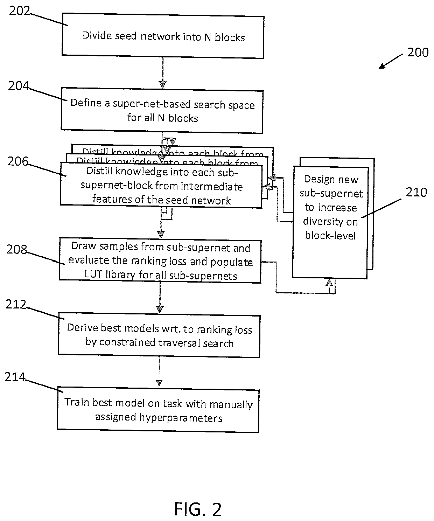

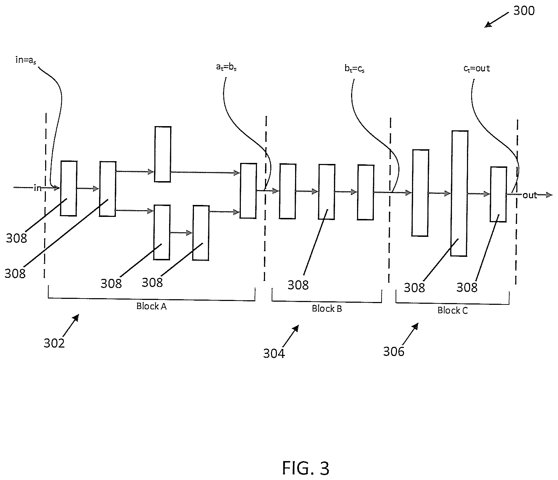

FIG. 2 is a flow chart depicting an example method 200 for performing block-wise NAS. In step 202, a pre-trained seed network is divided into a number N of blocks. FIG. 3 depicts an example seed network 300, that has been subdivided into blocks 302, 304, and 306 (i.e., N = 3). As illustrated in FIG. 3, seed network 300 may have arbitrary complex structure and may not necessarily rely on linear single-path architectures. As such, each block 302, 304, 306 may include a number of operators 308 or layers (e.g., pooling operators, convolutional operators, filters) that may be connected in combinations of series and parallel connections.

Following block-wise NAS principles, as part of step 202, inputs (as, bs, cs, as shown in FIG. 3) and the corresponding block outputs (at, bt, ct) (determined by means of forward-passing a training dataset) are recorded. These recorded values are later used in a feature-level knowledge distillation process also referred to as block knowledge distillation (BKD). Therefore, the seed network generated in step 202 and depicted in FIG. 3 can be viewed as a teacher model. Due to inherent regularizing effects, the resulting performance of a searched model can in fact outperform the seed network performance.

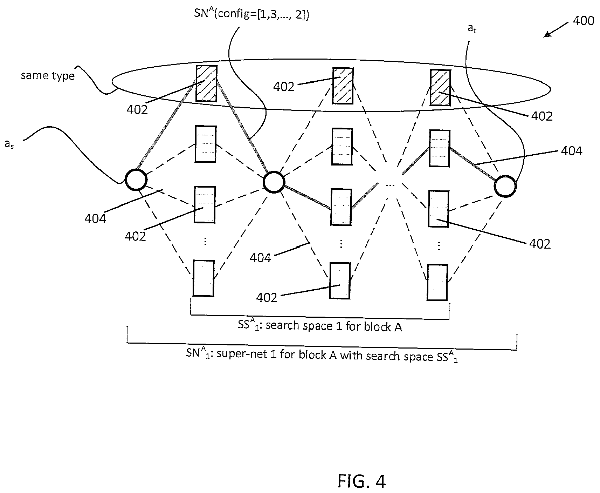

With the seed network generated in step 202, block-wise NAS can proceed using a super-net based approach to identify optimal candidate architectures for each block (e.g., blocks 302, 304, 306 of the seed network). As such, in step 204 a super-net-based search space is defined for each of the N blocks of the seed network. An example super-net-based search space 400 is depicted in FIG. 4. Super-net-based search space 400 defines a number of candidate architectures for, in this example, block 302 of the seed network depicted in FIG. 3. In FIG. 4, the various blocks 402 represent operators of various types. Blocks 402 with similar hatching are of the same type.

Super-net-based search space 400 defines a number of pathways 404 between the various blocks 402. Depending upon which pathways 404 are enabled, the various blocks 402 of super-net-based search space 400 can be connected in different configurations to generate multiple candidate architectures for the block (e.g., block 302 of seed network 300) being evaluated.

During operation, the super-net based search spaces defined for each block of the original seed network are generated and individually trained in step 206. Consequently, these individual block super-nets are commonly referred to as "sub-super-net" spaces. Each sub-super-net search space is trained by sampling and training a network from all possible paths 404 for each batch from the training dataset. During training, multiple batches are processed and for each batch different path combinations are sampled.

In such conventional approaches to block-wise NAS, sub-super-net ("sub" because a super-net-based search approach is being used on low-level blocks) search spaces are by their nature relatively homogeneous and may not incorporate training-related hyper-parameters (e.g., optimizer, number of epochs, batch size). Block-wise NAS trains a sub-super-net on each block given the recorded inputs and outputs of the seed/teacher network, as described above. Sampled candidates from these trained sub-super-nets are then evaluated to derive a ranking score. This ranking score can be derived by evaluating the MAE, MSE, cosine similarity (CS), BKD loss, etc. and block-size-normalized versions of MAE, MSE, CS, BKD loss, etc.) of the various sub-super-net candidate configurations. The ranking score of each candidate architecture in each block is stored in a database in the form of a look-up table (LUT) in step 208. The collection of LUTs for all blocks is referred to as LUT library. At this stage, an optional feedback loop may be implemented in step 210 in which new sub-super-net search spaces may be defined with increasing architecture diversity on the block level to expand the scope of different architecture designs that are covered by the ranking scores stored in the LUT library.

Given the LUT library, a global (i.e., covering all blocks) network architecture can be determined by implementing hardware-aware NAS. Specifically, in step 212 the most optimized candidate designs (e.g., with regard to ranking loss), as set forth in the LUT library are determined by constrained traversal search. Specifically, the search can be implemented by a constrained traversal search during which the best (according to the ranking score of the LUT library) model is derived for each block where the best model also meets given hardware-constraints (e.g., given by maximum latency, model size) - deemed a "suitable" network.

Then with the candidate design architecture selected, in step 214 the selected candidate design architecture is trained using manually selected hyperparameters.

In contrast to conventional block-wise NAS approaches, the present NAS approach utilizes a sample-based NAS in which the search spaces for each block in in the initial seed network are configured to provide more diverse operations. In the present approach, a user can either define a search space manually for each block or a pre-defined diverse standard search space. These more diverse search spaces may include not only architectural parameters but also training-related hyper-parameters.

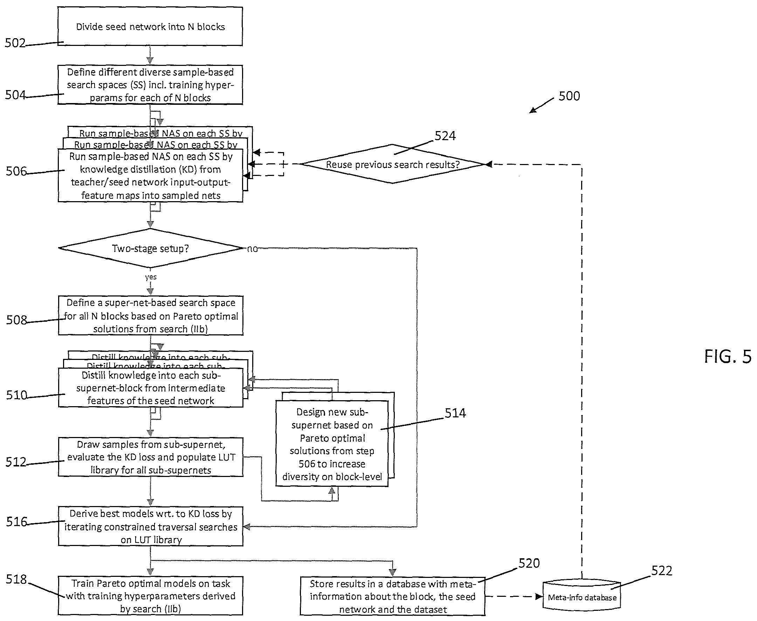

FIG. 5 is a flow chart depicting an example method 500 for performing block-wise NAS in accordance with the present disclosure. Method 500 may be executed by any suitable computer system or processor, such as architecture search computing system 650, server computing system 630, user computing device 602, and/or combinations thereof. In step 502, an input seed network is divided into a number N of blocks. Each block represents a portion of the entire network architecture, to be optimized in accordance with method 500. For example, FIG. 3 depicts a complete neural network divided into three blocks (302, 304, 306). The seed network division into N blocks in step 502 can be performed manually or automatically. In the manual case, users are given full freedom to define the number of blocks, and where each block starts and ends. This can be helpful for advanced users that know how to design a block-based search space and where to focus the optimization, based on prior knowledge of the seed network structure. When this process is automated, the initial seed network is divided into N blocks as determined by the seed network architecture "stages", where each stage is characterized by the usage of the same number of filters in each of the stage's layers. Afterwards, users can select 1-N blocks to optimize, using insights from the distribution of secondary objectives (e.g., latency, or memory). For example, it could be that 60% of the model size is concentrated in only a single block. Hence, users can opt for a quick optimization focused on a particular block that contributes the most complexity to the model, instead of searching all blocks, which may take longer and increase processing overhead. An example of such a seed network is depicted in FIG. 3. With the divided network generated in step 502, block-wise NAS can proceed using a sample-based approach to identify optimal candidate architectures for each individual block (e.g., blocks 302, 304, 306) of the seed network. As such, in step 504 a set of diverse search spaces is defined for each of the individual N blocks of the seed network that were established/defined in step 502. Each search space in the set of search spaces for each block may include variations of the seed network blocks in terms of number of filters, layers, kernel sizes within each block. Moreover, the search spaces can also incorporate network morphisms in which layers can be added or deleted from the network blocks, parallel branches can be inserted or removed from the network blocks, etc. These search spaces can be significantly more diverse compared to the spaces used in conventional supernet-based approaches, where the number of searchable operations is limited and in which searching for training-related hyperparameters (e.g., such as learning rate, batch size, etc.) may not be possible. In various embodiments, the content of the search space can be created both manually and/or automatically. When created manually, users are given the freedom to decide what to include in the search space. This can be beneficial for advanced users with background knowledge on search space design. When creating automatically, the search space in each block can be determined by "exploding" a block in terms of its attributes. For example, a 2D convolution's attributes may include a number of filters, kernel sizes, dilations, etc. By automatically parsing and "exploding" these attributes into searchable attributes (e.g., by iterating on variations in those attributes to generate new search spaces), an automated approach for defining a search space with searchable filters, kernel sizes, dilations, etc. can be implemented.

After defining the search spaces in step 504, a guided (e.g., by means of Bayesian optimization) sample-based search is executed in step 506 in which a number of different block configurations, as set forth in the relevant search space, are established and tested. This approach is used to determine a number of block configurations that are selected from the relevant search space and that also minimize block-wise knowledge distillation loss as compared to other block configurations belonging to the same search space. In an embodiment, step 506 may only call for optimizing blocks to minimize BKD loss. To optimize each candidate block, a forward pass is first executed through the entire seed network and the input/output features of the block currently being optimized are extracted from the same block of the seed network (i.e., the teacher's block). Using the teacher block's input features, a forward pass is run through the candidate block. Using the output features of the candidate block, the BKD loss is minimized as between the teacher's and the candidate block's output features.

In general, step 506 may be heavily parallelized - not only N-times due to N individual blocks of the initial seed network - but along other dimensions, too. Specifically, each sample/trial in a sampled-based NAS approach can be independently evaluated and therefore multiple workers may be used during sampling-based NAS on each block search space, where each block search space includes only a subset of the N blocks of the seed network. During this search process secondary hardware-metrics are taken into account to derive not only architecturally diverse networks but also diverse networks with respect to their secondary metrics/hardware costs.

For each candidate block processed during the search, diverse hardware-specific metrics such as model size, latency, energy, etc., can be included by evaluating/profiling each of the candidate blocks on a given hardware. The resulting comparisons can be stored as data records (e.g., tuples) containing BKD losses and HW-related metrics.

In an embodiment, step 506 derives a set of Pareto optimal block configurations (i.e., sub-networks for each block) according to their primary and secondary objectives. The Pareto-optimal block configurations can be derived according to the primary objective, that is, the BKD loss, and the secondary HW-related objectives (e.g., model size, latency, etc.), where both are determined/evaluated during the search processes of method 500. In this step, the identified block configurations can be Pareto optimal with regards to the defined ranking score, which may be used as a heuristic to judge the quality of the determined block configurations.

In a first approach to implementing method 500 (i.e., the two-stage approach) the method proceeds to step 508 in which the Pareto optimal block-configurations of each block that were identified in step 506 are used to build block-wise sub-super-nets. In the two-stage implementation, sub-supernets are constructed based on the Pareto optimal solutions found in step 506. Specifically, the operations that led to the Pareto optimal solutions in step 506 are determined. Those operations then become searchable operations in the sub-supernets. This divide-and-conquer approach allows step 506 to start from a diverse search space and cheaply build a good and more refined search space for the sub-supernets from bottom up. As such, these block-wise sub-super-nets are generally a more diverse version of a conventional super-net, such as super-net-based search space 400 of FIG. 4.

In steps 510 and 512 a conventional block-wise NAS approach is implemented, but using the optimized configurations of the sub-super-nets that were determined in step 508 to determine optimal configurations of the sub-super-nets. Specifically, in step 510, the optimally- configured sub-super-nets defined for each block of the original seed network are trained using intermediate features of the initial seed network. Specifically, sub-supernets are trained by sampling network candidates from these and then minimizing the BKD loss between the teacher blocks (i.e., portions of the original seed network) and the sampled network's output feature maps. During this training step, multiple batches are processed and for each batch different paths are sampled.

Sampled candidates from these trained and more diversely configured sub-super-nets are then evaluated to derive a ranking score. This ranking score can be derived by evaluating the MAE, MSE, cosine similarity (CS), BKD loss, etc. and block-size-normalized versions of MAE, MSE, CS, BKD loss, etc.) of the various sub-super-net candidate configurations. The ranking score of each candidate architecture in each block is stored in a database in the form of a look-up table (LUT) in step 512. The collection of LUTs for all blocks is referred to as LUT library. At this stage, an optional feedback loop may be implemented in step 514 in which new sub-super-net search spaces may be defined based on the Pareto optimal solutions that were determined in step 506 to expand the scope of different architecture designs that are covered by the ranking scores stored in the LUT library. When implementing the so-called "two-stage" setup, trained hyper-parameters are not included into the various search spaces because the sub-super-nets cannot include different training hyper-parameters - a super-net is in principle bound to a single set of training hyper-parameters. Furthermore, in the case of limited training resources, the sub-super-nets may have limited size and variety. Optional step 514 addresses this limitation by iteratively building new sub-super-nets based on the previously identified (i.e., in step 506) Pareto optimal block configurations.

The LUT library created in step 512 enables the derivation of a global (i.e., covering all blocks) network architecture through a multi-objective optimization based on the ranking scores in the LUT library and secondary hardware-aware metrics that may be stored in the same LUT, stored separately, or derived online by means of hardware-in-the-loop-profiling, surrogate modelling, simulations, etc. Specifically, in step 516, the best models (e.g., evaluated based upon the BKD loss) are derived using the LUT library metrics by performed, for example, traversal searches on the LUT library.

The derived global architectures, which comprise the Pareto optimal models determined in step 516, are then trained to full convergence in step 518. This final training step may be assisted by initializing the individual sub-networks of each block by weights derived during the sample-based search in step 506 or by weights of the trained sub-super-network.

In step 520, the results of the sampling-based search performed in steps 506, 508, 510, 512, (optional step) 514, and 516 are stored in a meta-information database 522.

This meta-information stored in database 522 can include information about each block of the seed network such as input and output resolution, position in the seed network, size (e.g., #params, #flops, #layers), dataset information (e.g., size, task) and more. The meta-information stored in database 522 can then be reused via step 524, in future NAS activities to assist in and reduce the computational overhead associated with the sample-based search of step 506. Specifically, in instances in which an initial seed network is split into blocks (e.g., in step 502) that resemble blocks that have been optimized during previous searches, this meta-information database 522 can be accessed to retrieve the results of processing those prior, similar blocks. The information from those prior searches can then be reused (sometimes also referred to as meta-learning) to speed up and improve the efficiency of the search process by converging faster/earlier. This can be achieved, for example, by pre-training the surrogate model (Gaussian process in a Bayesian-optimization-based search) on the previously acquired meta-information before sampling networks for evaluation in step 506 of FIG. 5.

In an alternate implementation of method 500, a sample-based NAS process (e.g., comprising steps 504, 506) can be executed with the determined ranking losses (e.g., BKD loss, cosine similarity, etc.) can be directly stored into a LUT library that can be used later in step 516 of method 500. This approach follow's the "one-stage" approach in which steps 508, 510, 512, 514, and 516 are effectively skipped. In that case, the search space of the sample-based approach may include training hyper-parameters (e.g., learning rate, initialization) and may rely upon previously stored meta-information retrieved from database 522.

By implementing method 500 as illustrated in FIG. 5 and described below, a full set of candidate networks meeting different hardware-constraints can be created by, for example, running multiple differently constrained searches. All information about block-wise trained samples, global architectures, hyper-parameters, seed network block-division, etc. is stored in the meta-information database for later reuse for more efficient NAS activities going forward.

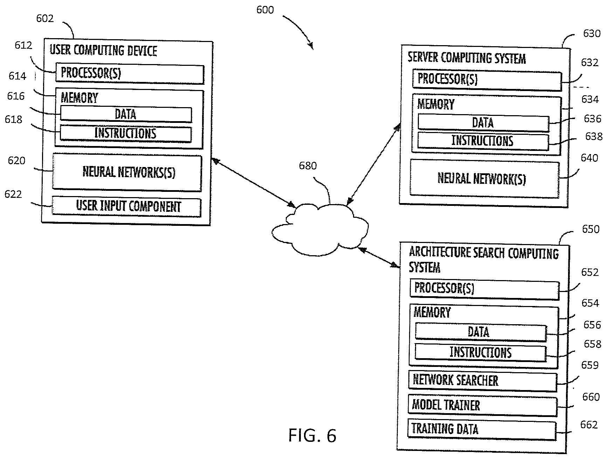

FIG. 6 depicts a block diagram of an example computing system 600 according to example embodiments of the present disclosure. The system 600 includes a user computing device 602, a server computing system 630, and an architecture search computing system 650 that are communicatively coupled over a network 680.

The user computing device 602 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 602 includes one or more processors 612 and a memory 614. The one or more processors 612 can be any suitable processing device (e.g., a processor core, a microprocessor, an ASIC, a FPGA, a controller, a microcontroller, etc.) and can be one processor or a plurality of processors that are operatively connected. The memory 614 can include one or more non-transitory computer-readable storage mediums, such as RAM, ROM, EEPROM, EPROM, flash memory devices, magnetic disks, etc., and combinations thereof. The memory 614 can store data 616 and instructions 618 which are executed by the processor 612 to cause the user computing device 602 to perform operations.

In some implementations, the user computing device 602 can store or include one or more neural networks 620. For example, the neural networks 620 can be or can otherwise include various machine-learned models such feed-forward neural networks, recurrent neural networks (e.g., long short-term memory recurrent neural networks), convolutional neural networks or other forms of neural networks.

In some implementations, the one or more neural networks 620 can be received from the server computing system 630 over network 680, stored in the user computing device memory 614, and then used or otherwise implemented by the one or more processors 612. In some implementations, the user computing device 602 can implement multiple parallel instances of a single neural network 620

Additionally, or alternatively, one or more neural networks 640 can be included in or otherwise stored and implemented by the server computing system 630 that communicates with the user computing device 602 according to a client-server relationship. For example, the neural networks 640 can be implemented by the server computing system 640 as a portion of a web service. Thus, one or more networks 620 can be stored and implemented at the user computing device 602 and/or one or more networks 640 can be stored and implemented at the server computing system 630.

The user computing device 602 can also include one or more user input component 622 that receives user input.

The server computing system 630 includes one or more processors 632 and a memory 634. The one or more processors 632 can be any suitable processing device (e.g., a processor core, a microprocessor, an ASIC, a FPGA, a controller, a microcontroller, etc.) and can be one processor or a plurality of processors that are operatively connected. The memory 634 can include one or more non-transitory computer-readable storage mediums, such as RAM, ROM, EEPROM, EPROM, flash memory devices, magnetic disks, etc., and combinations thereof. The memory 634 can store data 636 and instructions 638 which are executed by the processor 632 to cause the server computing system 630 to perform operations.

In some implementations, the server computing system 630 includes or is otherwise implemented by one or more server computing devices. In instances in which the server computing system 630 includes plural server computing devices, such server computing devices can operate according to sequential computing architectures, parallel computing architectures, or some combination thereof.

As described above, the server computing system 630 can store or otherwise include one or more machine-learned neural networks 640. For example, the neural networks 640 can be or can otherwise include feed forward neural networks, deep neural networks, recurrent neural networks, and convolutional neural networks.

The user computing device 602 and/or the server computing system 630 can train and/or evaluate the networks 620 and/or 640 via interaction with the architecture search computing system 650 that is communicatively coupled over the network 680. The architecture search computing system 650 can be separate from the server computing system 630 or can be a portion of the server computing system 630.

The architecture search computing system 650 includes one or more processors 652 and a memory 654. The one or more processors 652 can be any suitable processing device (e.g., a processor core, a microprocessor, an ASIC, a FPGA, a controller, a microcontroller, etc.) and can be one processor or a plurality of processors that are operatively connected. The memory 654 can include one or more non-transitory computer-readable storage mediums, such as RAM, ROM, EEPROM, EPROM, flash memory devices, magnetic disks, etc., and combinations thereof. The memory 654 can store data 656 and instructions 658 which are executed by the processor 652 to cause the architecture search computing system 650 to perform operations. In some implementations, the architecture search computing system 650 includes or is otherwise implemented by one or more server computing devices.

The architecture search computing system 650 can include a model trainer 660 that trains and/or evaluates the machine-learned networks 620 and/or 640 stored at the user computing device 602 and/or the server computing system 630 using various training or learning techniques, such as, for example, backwards propagation of errors. In some implementations, performing backwards propagation of errors can include performing truncated backpropagation through time. The model trainer 660 can perform a number of generalization techniques (e.g., weight decays, dropouts, etc.) to improve the generalization capability of the models being trained.

In particular, the model trainer 660 can train the neural networks 620 and/or 640 based on a set of training data 662. In some implementations, if the user has provided consent, the training examples can be provided by the user computing device 602. Thus, in such implementations, the network 620 provided to the user computing device 602 can be trained by the architecture search computing system 650 on user-specific data received from the user computing device 602. In some instances, this process can be referred to as personalizing the model.

The architecture search computing system 650 can also include a network searcher 659. The network searcher 659 can have the components and frameworks described herein. Thus, for example, the network searcher 659 can include a controller (e.g., an RNN-based controller) and a reward generator configured to execute the method of FIG. 5. The network searcher 659 can cooperate with the model trainer 660 to train the controller and/or generated architectures. The architecture search computing system 650 can also optionally be communicatively coupled with various other devices (not specifically shown) that measure performance parameters of the generated networks (e.g., mobile phone replicas which replicate mobile phone performance of the networks).

Each of the model trainer 660 and the network searcher 659 can include computer logic utilized to provide desired functionality. Each of the model trainer 660 and the network searcher 659 can be implemented in hardware, firmware, and/or software controlling a general-purpose processor. For example, in some implementations, each of the model trainer 660 and the network searcher 659 can include program files stored on a storage device, loaded into a memory and executed by one or more processors. In other implementations, each of the model trainer 660 and the network searcher 659 can include one or more sets of computer-executable instructions that are stored in a tangible computer-readable storage medium such as RAM hard disk or optical or magnetic media.

The network 680 can be any type of communications network, such as a local area network (e.g., intranet), wide area network (e.g., Internet), or some combination thereof and can include any number of wired or wireless links. In general, communication over the network 680 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

FIG. 6 illustrates one example computing system that can be used to implement the present disclosure. Other computing systems can be used as well. For example, in some implementations, the user computing device 602 can include the model trainer 660 and the training dataset 662. In such implementations, the networks 620 can be both trained and used locally at the user computing device 602. In some of such implementations, the user computing device 602 can implement the model trainer 660 to personalize the networks 620 based on user-specific data.

Further, although the present disclosure is described with particular reference to neural networks. The systems and methods described herein can be applied to other multi-layer machine-learned model architectures.

A computing system divides an initial seed network into a plurality of blocks to form a network search space that includes candidate neural architectures. For each block in the plurality of blocks, sample-based search spaces are defined. Each sample-based search space includes candidate block configurations. The candidate block configurations are determined by determining candidate block configurations that minimize a block-wise knowledge distillation loss. A first set of block configurations that are Pareto optimal block configurations are determined from the candidate block configurations in the sample-based search spaces. Sub-super-net search spaces for each block configuration in the first set of block configurations are determined. Using input training data, each of the sub-super-net search spaces are trained to generate a trained candidate models. An optimized neural architecture is determined by determining a first trained candidate model of the trained candidate models that minimizes a knowledge distillation loss of the trained candidate models.

As will be appreciated by one skilled in the art, aspects of the present disclosure may be embodied as a system, process, method, and/or program product. Accordingly, various aspects of the present disclosure (e.g., the machine learning system) may take the form of an entirely hardware embodiment, an entirely software embodiment (including firmware, resident software, micro-code, etc.), or embodiments combining software and hardware aspects, which may generally be referred to herein as a "circuit," "circuitry," "module," or "system." Furthermore, aspects of the present disclosure may take the form of a program product embodied in one or more computer readable storage medium(s) having computer readable program code embodied thereon. (However, any combination of one or more computer readable medium(s) may be utilized. The computer readable medium may be a computer readable signal medium or a computer readable storage medium.)

A computer readable storage medium may be, for example, but not limited to, an electronic, magnetic, optical, electromagnetic, infrared, biologic, atomic, or semiconductor system, apparatus, controller, or device, or any suitable combination of the foregoing, wherein the computer readable storage medium is not a transitory signal per se. More specific examples (a non-exhaustive list) of the computer readable storage medium may include the following: an electrical connection having one or more wires, a portable computer diskette, a hard disk, a random access memory ("RAM"), a read-only memory ("ROM"), an erasable programmable read-only memory ("EPROM" or flash memory), an optical fiber, a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, controller, or device. Program code embodied on a computer readable signal medium may be transmitted using any appropriate medium, including but not limited to wireless, wire line, optical fiber cable, RF, etc., or any suitable combination of the foregoing.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, controller, or device.

The block diagrams in the figures illustrate architecture, functionality, and operation of possible implementations of circuitry, systems, methods, processes, and program products according to various embodiments of the present disclosure. In this regard, certain blocks in the block diagrams may represent a module, segment, or portion of code, which includes one or more executable program instructions for implementing the specified logical function(s). It should also be noted that, in some implementations, the functions noted in the blocks may occur out of the order noted in the figures. For example, two blocks shown in succession may, in fact, be executed substantially concurrently, or the blocks may sometimes be executed in the reverse order, depending upon the functionality involved.

Modules implemented in software for execution by various types of processors may, for instance, include one or more physical or logical blocks of computer instructions, which may, for instance, be organized as an object, procedure, or function. Nevertheless, the executables of an identified module need not be physically located together, but may include disparate instructions stored in different locations which, when joined logically together, include the module, and achieve the stated purpose for the module. Indeed, a module of executable code may be a single instruction, or many instructions, and may even be distributed over several different code segments, among different programs, and across several memory devices. Similarly, operational data (e.g., knowledge bases of adapted weights and/or biases described herein) may be identified and illustrated herein within modules, and may be embodied in any suitable form and organized within any suitable type of data structure. The operational data may be collected as a single data set, or may be distributed over different locations including over different storage devices. The data may provide electronic signals on a system or network.

These program instructions may be provided to one or more processors and/or controller(s) of a general-purpose computer, special purpose computer, or other programmable data processing apparatus (e.g., controller) to produce a machine, such that the instructions, which execute via the processor(s) of the computer or other programmable data processing apparatus, create circuitry or means for implementing the functions/acts specified in the block diagram block or blocks.

It will also be noted that each block of the block diagrams, and combinations of blocks in the block diagrams, can be implemented by special purpose hardware-based systems (e.g., which may include one or more graphics processing units) that perform the specified functions or acts, or combinations of special purpose hardware and computer instructions. For example, a module may be implemented as a hardware circuit including custom VLSI circuits or gate arrays, off-the-shelf semiconductors such as logic chips, transistors, controllers, or other discrete components. A module may also be implemented in programmable hardware devices such as field programmable gate arrays, programmable array logic, programmable logic devices, application specific ICs, microcontrollers, systems on a chip, general purpose processors, microprocessors, or the like.

Computer program code, i.e., instructions, for carrying out operations for aspects of the present disclosure may be written in any combination of one or more programming languages, including an object-oriented programming language such as Java, Smalltalk, Python, C++, or the like, conventional procedural programming languages, such as the "C" programming language or similar programming languages, or any of the machine learning software disclosed herein.

These program instructions may also be stored in a computer readable storage medium that can direct a computer system, other programmable data processing apparatus, controller, or other devices to function in a particular manner, such that the instructions stored in the computer readable medium produce an article of manufacture including instructions which implement the functions/acts specified in the block diagram block or blocks.

The program instructions may also be loaded onto a computer, other programmable data processing apparatus, controller, or other devices to cause a series of operational steps to be performed on the computer, other programmable apparatus or other devices to produce a computer implemented process such that the instructions which execute on the computer, other programmable apparatus, or other devices provide processes for implementing the functions/acts specified in the block diagram block or blocks.

In some aspects, the techniques described herein relate to a computing system, including: one or more processors; and one or more non-transitory computer-readable media that stores instructions that, when executed by the one or more processors, cause the computing system to implement a neural architecture search by performing the steps of: dividing an initial seed network into a plurality of blocks to form a network search space, wherein the network search space includes a plurality of a candidate neural architectures, defining, for each block in the plurality of blocks, a plurality of sample-based search spaces, wherein each sample-based search space includes a plurality of candidate block configurations, and the plurality of candidate block configurations are determined by determining candidate block configurations that minimize a block-wise knowledge distillation loss, determining a first set of block configurations that are Pareto optimal block configurations from the plurality of candidate block configurations in the plurality of sample-based search spaces, determining a plurality of sub-super-net search spaces for each block configuration in the first set of block configurations, training, using a set of input training data, each of the plurality of sub-super-net search spaces to generate a plurality of trained candidate models, and determining an optimized neural architecture by determining a first trained candidate model of the plurality of trained candidate models that minimizes a knowledge distillation loss of the plurality of trained candidate models.

In some aspects, the techniques described herein relate to a computing system, wherein the instructions, when executed by the one or more processors, cause the computing system to perform steps of: storing information describing each block in the plurality of blocks of the initial seed network into a database.

In some aspects, the techniques described herein relate to a computing system, wherein the information describing each block includes at least one of an input resolution, an output resolution, a position in the seed network, and a size of each block.

In some aspects, the techniques described herein relate to a computing system, wherein the instructions, when executed by the one or more processors, cause the computing system to perform steps of: dividing an initial seed network into a second plurality of blocks, wherein the second initial seed network includes a second plurality of a candidate neural architectures; and retrieving, from the database, information describing at least one block of the second plurality of blocks.

In some aspects, the techniques described herein relate to a computing system, wherein the step of retrieving, from the database, information describing at least one block of the second plurality of blocks is performed before defining, for each block in the second plurality of blocks, a second plurality of sample-based search spaces, wherein each sample-based search space in the second plurality of sample-based search spaces includes a second plurality of candidate block configurations, and the second plurality of candidate block configurations are determined by determining candidate block configurations that minimize the block-wise knowledge distillation loss.

In some aspects, the techniques described herein relate to a computing system, including: one or more processors; and one or more non-transitory computer-readable media that stores instructions that, when executed by the one or more processors, cause the computing system to implement a neural architecture search by performing the steps of: determining a network search space that includes a plurality of a candidate neural architectures based on an initial seed network, defining, for each block in the plurality of blocks, a plurality of sample-based search spaces, wherein each sample-based search space includes a plurality of candidate block configurations, determining a plurality of sub-super-net search spaces for each block configuration in a first set of block configurations of the plurality of candidate block configurations, training, using a set of input training data, each of the plurality of sub-super-net search spaces to generate a plurality of trained candidate models, and determining an optimized neural architecture by determining a first trained candidate model of the plurality of trained candidate models, wherein the first trained candidate model minimizes a knowledge distillation loss of the plurality of trained candidate models.

In some aspects, the techniques described herein relate to a computing system, wherein the instructions, when executed by the one or more processors, cause the computing system to perform steps of: storing information describing each block in the plurality of blocks of the initial seed network into a database.

In some aspects, the techniques described herein relate to a computing system, wherein the information describing each block includes at least one of an input resolution, an output resolution, a position in the seed network, and a size of each block.

In some aspects, the techniques described herein relate to a computing system, wherein the information describing each block includes each of the input resolution, the output resolution, the position in the seed network, and the size of each block.

In some aspects, the techniques described herein relate to a computing system, wherein the instructions, when executed by the one or more processors, cause the computing system to perform steps of: dividing an initial seed network into a second plurality of blocks, wherein the second initial seed network includes a second plurality of a candidate neural architectures; and retrieving, from the database, information describing at least one block of the second plurality of blocks.

In some aspects, the techniques described herein relate to a computing system, wherein the step of retrieving, from the database, information describing at least one block of the second plurality of blocks is performed before defining, for each block in the second plurality of blocks, a second plurality of sample-based search spaces, wherein each sample-based search space in the second plurality of sample-based search spaces includes a second plurality of candidate block configurations, and the second plurality of candidate block configurations are determined by determining candidate block configurations that minimize block-wise knowledge distillation loss.

In some aspects, the techniques described herein relate to a computing system, wherein determining the first set of block configurations includes determining the first set of block configurations are Pareto optimal block configurations.

In some aspects, the techniques described herein relate to a computing system, wherein the instructions, when executed by the one or more processors, cause the computing system to perform steps of: training, using a set of input training data, each of the plurality of sub-super-net search spaces to generate the plurality of trained candidate models.

In some aspects, the techniques described herein relate to a method, including: determining a network search space that includes a plurality of a candidate neural architectures based on an initial seed network, defining, for each block in the plurality of blocks, a plurality of sample-based search spaces, wherein each sample-based search space includes a plurality of candidate block configurations, determining a plurality of sub-super-net search spaces for each block configuration in a first set of block configurations in the plurality of candidate block configurations, training, using a set of input training data, each of the plurality of sub-super-net search spaces to generate a plurality of trained candidate models, and determining an optimized neural architecture by determining a first trained candidate model of the plurality of trained candidate models, wherein the first trained candidate model minimizes a knowledge distillation loss of the plurality of trained candidate models.

In some aspects, the techniques described herein relate to a method, further including storing information describing each block in the plurality of blocks of the initial seed network into a database.

In some aspects, the techniques described herein relate to a method, wherein the information describing each block includes at least one of an input resolution, an output resolution, a position in the seed network, and a size of each block.

In some aspects, the techniques described herein relate to a method, further including: dividing an initial seed network into a second plurality of blocks, wherein the second initial seed network includes a second plurality of a candidate neural architectures; and retrieving, from the database, information describing at least one block of the second plurality of blocks.

In some aspects, the techniques described herein relate to a method, wherein the step of retrieving, from the database, information describing at least one block of the second plurality of blocks is performed before defining, for each block in the second plurality of blocks, a second plurality of sample-based search spaces, wherein each sample-based search space in the second plurality of sample-based search spaces includes a second plurality of candidate block configurations, and the second plurality of candidate block configurations are determined by determining candidate block configurations that minimize block-wise knowledge distillation loss.

In some aspects, the techniques described herein relate to a method, wherein determining the first set of block configurations includes determining the first set of block configurations are Pareto optimal block configurations.

In some aspects, the techniques described herein relate to a method, further including training, using a set of input training data, each of the plurality of sub-super-net search spaces to generate the plurality of trained candidate models.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A computing system, comprising:
one or more processors; and
one or more non-transitory computer-readable media that stores instructions that, when executed by the one or more processors, cause the computing system to implement a neural architecture search by performing the steps of:
dividing an initial seed network into a plurality of blocks to form a network search space, wherein the network search space includes a plurality of a candidate neural architectures,
defining, for each block in the plurality of blocks, a plurality of sample-based search spaces, wherein each sample-based search space includes a plurality of candidate block configurations, and the plurality of candidate block configurations are determined by determining candidate block configurations that minimize a block-wise knowledge distillation loss,
determining a first set of block configurations that are Pareto optimal block configurations from the plurality of candidate block configurations in the plurality of sample-based search spaces,
determining a plurality of sub-super-net search spaces for each block configuration in the first set of block configurations,
training, using a set of input training data, each of the plurality of sub-super-net search spaces to generate a plurality of trained candidate models, and
determining an optimized neural architecture by determining a first trained candidate model of the plurality of trained candidate models that minimizes a knowledge distillation loss of the plurality of trained candidate models.

2. The computing system of claim 1, wherein the instructions, when executed by the one or more processors, cause the computing system to perform steps of:
storing information describing each block in the plurality of blocks of the initial seed network into a database.

3. The computing system of claim 2, wherein the information describing each block includes at least one of an input resolution, an output resolution, a position in the seed network, and a size of each block.

4. The computing system of claim 2 or 3, wherein the instructions, when executed by the one or more processors, cause the computing system to perform steps of:
dividing an initial seed network into a second plurality of blocks, wherein the second initial seed network includes a second plurality of a candidate neural architectures; and
retrieving, from the database, information describing at least one block of the second plurality of blocks.

5. The computing system of claim 4, wherein the step of retrieving, from the database, information describing at least one block of the second plurality of blocks is performed before defining, for each block in the second plurality of blocks, a second plurality of sample-based search spaces, wherein each sample-based search space in the second plurality of sample-based search spaces includes a second plurality of candidate block configurations, and the second plurality of candidate block configurations are determined by determining candidate block configurations that minimize the block-wise knowledge distillation loss.

6. A method, comprising:
determining a network search space that includes a plurality of a candidate neural architectures based on an initial seed network,
defining, for each block in the plurality of blocks, a plurality of sample-based search spaces, wherein each sample-based search space includes a plurality of candidate block configurations,
determining a plurality of sub-super-net search spaces for each block configuration in a first set of block configurations in the plurality of candidate block configurations,
training, using a set of input training data, each of the plurality of sub-super-net search spaces to generate a plurality of trained candidate models, and
determining an optimized neural architecture by determining a first trained candidate model of the plurality of trained candidate models, wherein the first trained candidate model minimizes a knowledge distillation loss of the plurality of trained candidate models.

7. The method of claim 6, further comprising storing information describing each block in the plurality of blocks of the initial seed network into a database.

8. The method of claim 7, wherein the information describing each block includes at least one of an input resolution, an output resolution, a position in the seed network, and a size of each block.

9. The method of any of claims 6 to 9 further comprising:
dividing an initial seed network into a second plurality of blocks, wherein the second initial seed network includes a second plurality of a candidate neural architectures; and
retrieving, from the database, information describing at least one block of the second plurality of blocks.

10. The method of claim 9, wherein the step of retrieving, from the database, information describing at least one block of the second plurality of blocks is performed before defining, for each block in the second plurality of blocks, a second plurality of sample-based search spaces, wherein each sample-based search space in the second plurality of sample-based search spaces includes a second plurality of candidate block configurations, and the second plurality of candidate block configurations are determined by determining candidate block configurations that minimize block-wise knowledge distillation loss.

11. The method of any of claims 6 to 10, wherein determining the first set of block configurations includes determining the first set of block configurations are Pareto optimal block configurations.

12. The method of any of claims 6 to 11, further comprising training, using a set of input training data, each of the plurality of sub-super-net search spaces to generate the plurality of trained candidate models.
